# EUROPÄISCHE PATENTANMELDUNG

(11) **EP 1 927 761 A2**
(43) Veröffentlichungstag der Anmeldung: **04.06.2008**
(21) Anmeldenummer: 07109209.2
(22) Anmeldetag: 30.05.2007
(51) Int. Cl.: F15B 15/14, F16J 1/00

(54) **Kolben für einen durch Druckluft betätigbaren Arbeitszylinder**

(30) Priorität: 30.11.2006 DE 102006056519
(71) Anmelder: ROBERT BOSCH GMBH, 70442 Stuttgart (DE)
(72) Erfinder: Janietz, Ulrich, 30519, Hannover (DE); Liesenhoff, Thomas, 30159, Hannover (DE); Meyer, Ernst-August, 30974, Wennigsen (DE)
(74) Vertreter: Kietzmann, Lutz

(57) **Zusammenfassung**

Kolben für einen durch Druckluft betätigbaren Arbeitszylinder, der mit einem an einer Kolbenstange befestigbaren Grundkörper (1) aus einem harten Trägerkunststoff, der außenradial zumindest teilweise von einem Hüllkörper (2) aus einem weichen Dichtungskunststoff umgeben ist, wobei der Grundkörper (1) mit Kavitäten (3) versehen ist, welche vom Dichtungsmaterial des Hüllkörpers (2) ausgefüllt sind.

## Beschreibung

Die vorliegende Erfindung betrifft einen Kolben für einen durch Druckluft betätigbaren Arbeitszylinder, mit einem an einer Kolbenstange befestigbaren Grundkörper aus einem harten Trägerkunststoff, der außenradial zumindest teilweise von einem Hüllkörper aus einem weichen Dichtungskunststoff umgeben ist.

Kolben der hier interessierenden Art werden im Bereich der Fluidtechnik bei pneumatischen Zylindern eingesetzt., Hierbei wird der Kolben axial durch mindestens eine Druckkammer innerhalb des Arbeitszylinders bewegt. Die Beaufschlagung kann dabei ein- oder doppelseitig sein. Die wichtigsten Eigenschaften eines solchen Kolbens sind dessen leichter Lauf innerhalb des Arbeitszylinders, eine stabile Grundstruktur sowie eine zuverlässige Dichtung zwischen Kolben und der Innenwandung des Arbeitszylinders. Im Hinblick auf eine stabile Grundstruktur ist ein Kolben gewöhnlich aus unterschiedlichen Materialien zusammengesetzt, welche aufeinander folgend gefügt werden müssen. In den meisten Fällen weist der Kolben einen festen Grundkörper auf, um dem Kolben eine solide und definierte Tragestruktur zu verleihen. Diesen Grundkörper umschließt ein relativ hierzu weicheres, nachgiebiges Material, das die Dichtungsfunktionen gewährleistet. Der Grundkörper wird normalerweise mittels eines spanabhebenen Herstellungsverfahren oder eines Gießprozesses mit anschließender spanender Bearbeitung hergestellt und besteht vorzugsweise aus einem harten Kunststoff oder aus Metall.

Aus der DE 35 08 686 A1 geht ein derartiger Kolben hervor. Dieser besteht im Kern aus zwei auf die Kolbenstange aufziehbare Kolbenhalbteile aus Metall, welche den Grundkörper des Kolbens bilden. Hieran ist ein Hüllkörper aus einem Kunststoff aufgespritzt, welcher wiederum außenradial Dichtringe trägt, die in einer Umfangsnut auf dem Außenmantel des Hüllkörpers angeordnet sind. Bei dieser technischen Lösung weist der Kolben abstrakt gesehen einen dreischichtigen Aufbau auf. Die einzelnen Bauteile sind miteinander zu montieren, was den Fertigungsaufwand entsprechend erhöht.

Aus der DE 10 2005 015 215 A1 geht eine andere technische Lösung hervor, welche gegenüber dem vorstehend beschriebenen Stand der Technik montagefrei ist. Ein Kolben für einen Arbeitszylinder wird hier in einem mehrschrittigen Spritzgießverfahren hergestellt, ohne das es einer Montage von Einzelbauteilen bedarf. In einem ersten Schritt wird ein Grundkörper aus einem Trägerkunststoff durch Spritzgießen erzeugt. In einem zweiten Schritt wird ein ringförmiger Magnet innerhalb einer im Grundkörper vorgesehen Umfangsnut angespritzt. Der Magnet weist permanentmagnetische Eigenschaften auf und ist Bestandteil einer Positionserkennung des Kolbens im Rahmen eines induktiven Wegmesssystems am Arbeitszylinder. In einem dritten Schritt wird der Grundkörper samt Magnet von einem Dichtungskunststoff umspritzt, der einen Hüllkörper bildet. Sämtliche Montageschritte werden innerhalb desselben Spritzgießwerkzeugs durchgeführt, was die Herstellung entsprechend vereinfacht. Es entsteht eine im Prinzip radial sandwichartig aufeinander geschichtete Struktur der einzelnen spritzgießtechnisch aufzubringenden Komponenten. Die technische Lösung berücksichtigt bislang jedoch nicht ausreichend ein weiteres Erfordernis nach welchem ein Kolben auch eine hinreichende Dämpfungseigenschaft besitzen muss.

Selbst wenn der Grundkörper nicht aus Metall sondern bereits aus Kunststoff gefertigt ist, ergibt sich immer noch ein recht harter Endanschlag, wenn der durch Druckluft angetriebene Kolben in eine der Endlagenpositionen des Arbeitszylinders gelangt. Ein Überzug des Grundkörpers aus einem weichen Dichtungskunststoff im Sinne eines Hüllkörpers allein genügt nicht, um eine hinreichend hohe Energieverzehrung durch die geringe Schicht an dämpfenden Dichtungskunststoff zu erzielen. Würde die Materialstärke des den Grundkörper überdeckenden Hüllkörpers vergrößert werden, so würde sich die Baugröße des Kolbens selbst nachteilig erhöhen.

Es ist daher die Aufgabe der vorliegenden Erfindung, einen Kolben für einen durch Druckluft betätigbaren Arbeitszylinder zu schaffen, welcher sich spritzgießtechnisch einfach herstellen lässt, und welcher sich durch eine hohe Dämpfungswirkung bei gleichzeitig kompakter Bauform auszeichnet.

Die Aufgabe wird ausgehend von einem Kolben gemäß dem Oberbegriff von Anspruch 1 in Verbindung mit dessen kennzeichnenden Merkmalen gelöst. Die nachfolgenden abhängigen Ansprüche gegen vorteilhafte Weiterbildungen der Erfindung wieder.

Die Erfindung schließt die technische Lehre, dass der Grundkörper des Kolbens mit Kavitäten versehen ist, hiervon also im Inneren durchzogen ist, welche vom Dichtungskunststoff des Hüllkörpers ausgefüllt sind.

Der Vorteil der erfindungsgemäßen Lösung besteht insbesondere darin, dass hierdurch Kolben mit verbesserter Dämpfungseigenschaft herstellbar sind. Denn der Hüllkörper erstreckt sich nicht mehr allein um den Grundkörper herum, sondern füllt auch Hohlräume innerhalb des Grundkörpers aus, die so gewählt sind, dass eine bessere Anschlagsdämpfung erzielt wird. Die Kavitäten vergrößern die Wegstrecke des zwecks Endlagendämpfung zu komprimierenden weichen Dichtungskunststoffs, woraus sich eine höhere Elastizität ergibt. Durch Nutzung von Volumenbereichen innerhalb des Grundkörpers kann der erfindungsgemäße Kolben trotz verbesserter Dämpfungswirkung kompakt bauend ausgeführt werden. Die erfindungsgemäße Lösung bietet zudem die Möglichkeit, das Verhältnis von hartem Trägerkunststoff zu weichem Dichtungskunststoff je nach gefordertem Dämpfungsvermögen zu variieren. Dazu kann auch der volumenmäßige Anteil der beiden Materialien variiert werden. Insgesamt werden Zusatzbauteile zur Minimierung der Anschlagsenergie eingespart. Der erfindungsgemäße Kolben ermöglicht die Realisierung sehr kurzbauender Arbeitszylinder mit Dämpfung, was bislang aufgrund von Platzmangel nicht möglich war. Die Erfindung schafft durch Überlagerung von Schlagzähigkeit und Elastizität einen Komplettkolben mit den Funktionen Dichten und Dämpfen.

Vorzugsweise sollten die Kavitäten an den axialen Seitenflächen des Grundkörpers offen sein, um eine höhere Dämpfungswirkung zu erzielen. Denn hierdurch vergrößert sich der axial gerichtete Kompressionsweg für den zur Dämpfung dienenden weichen Dichtungskunststoff.

Eine besonders einfache spritzgießtechnische Realisierung des Grundkörpers lässt sich dadurch erzielen, in dem die Kavitäten in Form von Parallelnuten im Grundkörper ausgebildet sind. Derartige Parallelnuten lassen sich durch entsprechende Einlagen auf einfache Weise im Spritzgießwerkzeug realisieren.

Ist der erfindungsgemäße Kolben in Verbindung mit einem induktiven Positionserfassungssystem des Arbeitszylinders vorgesehen, so lässt sich ein hierfür erforderlicher zusätzlicher Magnetring aus permanentmagnetischen Material zwischen dem Grundkörper und dem Hüllkörper anspritzen. Der Magnetring sollte bezüglich der Axialerstreckung mittig am Grundkörper angeordnet sein.

Als Trägerkunststoff zur Bildung des Grundkörpers eignet sich insbesondere Polyamid (PA) oder Polyoxymethylen (POM). Ganz vorzugsweise ist ein Polyamid wie das Material "Verton RF 700" geeignet. Alle Vertonverbindungen bieten eine für diesen Einsatzzweck hinreichende mechanische Stabilität und sind innerhalb eines großen gestalterischen Freiraums spritzgießbar. Dagegen wird als Dichtungswerkstoff vorzugsweise Polyurethan (PU) oder Nitril-Butadien-Kautschuk (NBR) zum Einsatz gebracht. Polyurethan ist ein für den Gebrauch von Gleit- und Dichtelementen vorteilhaftes Kunststoffmaterial, da es weich und relativ abriebfest ist.

Vorzugsweise sollte der aus dem Dichtungsmaterial hergestellte Hüllkörper im Außenkantenbereich angeformte Dichtlippen mit umfassen. Diese Dichtlippen lassen sich spritzgießtechnisch einstückig mit dem Hüllkörper formen und verbessern die Dichtheit zwischen den Druckkammern des Arbeitszylinders. Vorzugsweise sollten die besagten Dichtlippen etwas nach außenradial abstehen, damit diese sich unter leichter Vorspannung an die Innenwandung des Arbeitszylinders anschmiegen.

Gemäß einer weiteren die Erfindung verbessernde Maßnahme ist vorgesehen, dass der Grundkörper eine koaxiale zentrale Durchgangsbohrung zur Befestigung einer Kolbenstange besitzt. Hierüber lässt sich eine Kolbenstange lösbar mit dem Grundkörper des Kolbens befestigen. Es ist jedoch auch denkbar, die Kolbenstange in die Durchgangsbohrung des Kolbens einzukleben, falls eine Austauschbarkeit des Kolbens im Verschleißfall sekundär relevant ist. Es sei auch darauf hingewiesen, dass der erfindungsgemäße Kolben nicht allein in Verbindung mit einer Kolbenstange eines herkömmlichen Arbeitszylinders eingesetzt werden kann. Der erfindungsgemäße Kolben eignet sich vielmehr auch für die Verwendung im Zusammenhang mit einem kolbenstangenlosen Zylinder, bei welchem der Kolben die Antriebskraft gewöhnlich über ein Umlaufband oder eine mechanische Querkopplungseinheit nach Außen weiterleitet.

Gemäß einer anderen die Erfindung verbessernden Maßnahme kann der Grundkörper mit mindestens einem koaxial angeformten Dämpfungsbuchsenabschnitt ausgestattet sein. Ein derartiger Dämpfungsbuchsenabschnitt wird bei pneumatischen Arbeitszylindern gewöhnlich in Verbindung mit einer zusätzlichen pneumatischen Endlagendämpfung angewendet. Durch einen in Axialerstreckung symmetrischen Aufbau des erfindungsgemäßen Kolbens kann dieser in einfacher Weise im Zusammenhang mit einem doppeltwirkenden Arbeitszylinder verwendet werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Darstellung des Grundkörpers eines Kolbens, und
- Figur 2: eine perspektivische Darstellung im Teilschnitt des kompletten Kolbens.

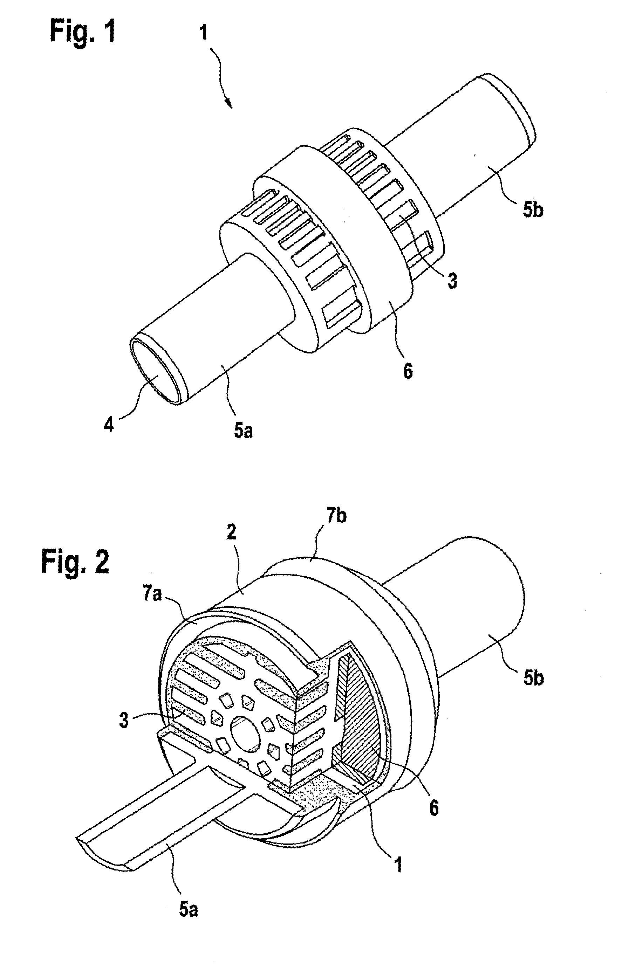

Gemäß Figur 1 wird der in Axialerstreckung symmetrisch aufgebaute Grundkörper 1 spritzgießtechnisch aus einem harten Trägerkunststoff, hier Polyamid (PA) hergestellt. Der Grundkörper 1 weist Kavitäten 3 auf, die in Form von Parallelnuten ausgebildet sind. Zur Befestigung an einer - nicht weiter dargestellten - Kolbenstange besitzt der Grundkörper 1 außerdem eine koaxiale zentrale Durchgangsbohrung 4. Beidseitig sich vom Hauptbereich des Grundkörpers 1 axial erstreckende Dämpfungsbuchsenabschnitte 5a, 5b dienen dem Zusammenwirken einer - hier ebenfalls nicht weiter dargestellten - pneumatischen Endlagendämpfung. Ferner ist bezüglich der Axialerstreckung des Grundkörpers 1 mittig ein Magnetring 6 vorgesehen, welcher mit einem - hier nicht weiter dargestellten - induktiven Positionsmesssystems des Arbeitszylinders zusammenwirkt.

Gemäß Figur 2 ist der Grundkörper 1 samt Magnetring 6 von einem angespritzten Hüllkörper 2 umgeben. Der Hüllkörper 2 besteht aus einem recht weichen Dichtungsmaterial, hier Polyurethan (PU). Wegen der speziellen Gestaltung des Grundkörpers 1 werden beim Spritzgießen auch die hierin vorgesehenen Kavitäten 3 mit dem Dichtungskunststoff des Hüllkörpers 2 ausgefüllt. Der Hüllkörper 2 weist im Außenkantenbereich angeformte Dichtlippen 7a und 7b auf, welche dichtend an der Innenwandung des - hier nicht weiter dargestellten - Arbeitszylinders zur Anlage kommen.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche umfasst. So ist es beispielsweise auch möglich, die Kavitäten stirnseitig offen zu lassen, um eine höhere Anschlagdämpfwirkung zu erzielen. Weiterhin kann der erfindungsgemäße Komplettkolben mit durch Dichtungskunststoff ausgefüllten Kavitäten auch im Zusammenhang mit kolbenstangenlosen Pneumatikzylindern verwendet werden.

### Bezugszeichenliste

- 1: Grundkörper
- 2: Hüllkörper
- 3: Kavitäten
- 4: Durchgangsbohrung
- 5: Dämpfungsbuchsenabschnitt
- 6: Magnetring
- 7: Dichtlippe

## Patentansprüche

1. Kolben für einen durch Druckluft betätigbaren Arbeitszylinder, der mit einem an einer Kolbenstange befestigbaren Grundkörper (1) aus einem harten Trägerkunststoff, der außenradial zumindest teilweise von einem Hüllkörper (2) aus einem weichen Dichtungskunststoff umgeben ist,
**dadurch gekennzeichnet, dass** der Grundkörper (1) mit Kavitäten (3) versehen ist, welche vom Dichtungsmaterial des Hüllkörpers (2) ausgefüllt sind.

2. Kolben nach Anspruch 1,
**dadurch gekennzeichnet, dass** die Kavitäten (3) an den axialen Seitenflächen des Grundkörpers (1) offen sind, um eine höhere Dämpfungswirkung zu erzielen.

3. Kolben nach Anspruch 1,
**dadurch gekennzeichnet, dass** die Kavitäten (3) des Grundkörpers (1) in Form von Parallelnuten ausgebildet sind.

4. Kolben nach Anspruch 1,
**dadurch gekennzeichnet, dass** zwischen dem Grundkörper (1) und dem Hüllkörper (2) ein bezüglich der Axialerstreckung mittig angeordneter Magnetring (6) vorgesehen ist.

5. Kolben nach Anspruch 1,
**dadurch gekennzeichnet, dass** der Trägerkunststoff des Grundkörpers (1) Polyamid (PA) oder Polyoxymethylen (POM) ist.

6. Kolben nach Anspruch 1,
**dadurch gekennzeichnet, dass** das Dichtungsmaterial des Hüllkörpers (2) Polyurethan (PU) oder Nitril-Butadien-Kautschuk (NBR) ist.

7. Kolben nach Anspruch 1,
**dadurch gekennzeichnet, dass** der Hüllkörper (2) im Außenkantenbereich angeformte Dichtlippen (7a, 7b) aufweist.

8. Kolben nach einem der vorstehenden Ansprüche,
**dadurch gekennzeichnet, dass** der Grundkörper (1) eine koaxiale zentrale Durchgangsbohrung (4) zur Befestigung an einer Kolbenstange besitzt.

9. Kolben nach Anspruch 1,
**dadurch gekennzeichnet, dass** der Grundkörper (1) mit mindestens einen koaxial angeformten Dämpfungsbuchsenabschnitt (5a, 5b) ausgestattet ist.

10. Kolben nach einem der vorstehenden Ansprüche,
**dadurch gekennzeichnet, dass** dieser durch einen in der Axialerstreckung symmetrischen Aufbau in einem doppelt wirkenden Arbeitszylinder einsetzbar ist.
